# FASCICULE DE BREVET EUROPEEN

(11) **EP 2 471 152 B1**
(45) Date de publication et mention de la délivrance du brevet: **05.06.2013**
(21) Numéro de dépôt: 10742214.9
(22) Date de dépôt: 07.07.2010
(51) Int. Cl.: H02G 3/30, F16L 3/223

(54) **BRIDE EN PEIGNE POUR CÂBLES HAUTE TENSION**
KAMMFLANSCH FÜR HOCHSPANNUNGSKABEL
COMB FLANGE FOR HIGH-VOLTAGE CABLES

(30) Priorité: 28.08.2009 FR 0955863
(43) Date de publication de la demande: 04.07.2012
(73) Titulaire: Peugeot Citroën Automobiles SA, 78140 Vélizy-Villacoublay (FR)
(72) Inventeur: WETTERWALD, Thomas, F-90000 Belfort (FR); DUVAL, Sophie, F-25350 Mandeure (FR)
(86) Numéro de dépôt international: PCT/FR2010/051430
(87) Numéro de publication internationale: WO 2011/023872

(56) Documents cités:
- DE-U1- 20 107 970
- US-A- 5 363 539

## Description

La présente invention concerne de manière générale un dispositif de retenue et de fixation d'éléments tubulaires tels que câbles, conduits tuyaux, gaines ou autres. L'invention concerne plus particulièrement une bride en peigne pour câbles haute tension destinés à être agencés sur un véhicule automobile.

Il est connu dans l'art antérieur, en particulier du document US 5 363539, une agrafe en peigne pour tubes flexibles. L'agrafe comprend une première partie munie d'empreintes destinées à recevoir des éléments tubulaires et une deuxième partie également munie d'empreintes venant recouvrir les éléments tubulaires placés dans les empreintes de la première partie. Les deux parties sont reliées l'une à l'autre aux moyens d'éléments de liaison formant charnière. A l'extrémité opposée de la charnière est prévu un mécanisme de fermeture au moyen d'un clip permettant de retenir les éléments tubulaires. L'agrafe comprend encore un évidement côté charnière traversant la deuxième partie et une portion de la première de sorte à permettre de fixer l'agrafe sur un support externe.

Un tel système de retenue d'éléments tubulaires présente néanmoins certains inconvénients. En effet, le mécanisme de fermeture au moyen d'un clip ne permet pas au monteur de séparer les tâches consistant d'une part à placer les éléments tubulaires dans leur position et à les retenir dans cette position, et d'autre part la tâche consistant à verrouiller ces éléments tubulaires dans la position choisie. En effet, les opérations dites d'indexage, i.e. positionnement précis des éléments tubulaires, et de verrouillage, i.e. maintien des éléments tubulaires dans la position indexée, sont réalisées conjointement ce qui présente une certaine difficulté pour le monteur. En effet, l'opération d'indexage d'une partie de l'agrafe avec l'autre partie de l'agrafe est réalisée lors de la fermeture du clip par le mécanisme de fermeture lui-même. De ce fait, la fonction d'indexage sera assurée plus ou moins convenablement selon la taille des éléments tubulaires, le lieu et la position dans laquelle le monteur l'effectue.

Il est également connu selon l'art antérieur, en particulier du document JP 2007-198474, une bride de retenue d'éléments tubulaires. Cette bride de retenue comprend également deux parties présentant chacune des empreintes pour recevoir les éléments tubulaires. Entre chaque empreinte sont prévus des moyens d'indexage et de fermeture assurant simultanément la retenue et le maintien des éléments tubulaires dans la position souhaitée par le monteur.

Bien que la bride de retenue présentée ci-dessus permette un meilleur indexage que celui présenter précédemment, les opérations d'indexage et de fermeture restent simultanées, rendant l'exécution difficile pour le monteur. En outre, la bride ainsi réalisée se trouve être nettement plus complexe dans sa configuration mécanique et est donc plus coûteuse.

Un but de la présente invention est de répondre aux différents inconvénients des documents de l'art antérieur mentionnés ci-dessus et en particulier, tout d'abord, de fournir une bride de fixation d'éléments tubulaires permettant un indexage et un verrouillage aisés pour le monteur.

Pour cela un premier aspect de l'invention concerne une bride de fixation d'éléments tubulaires comprenant une partie inférieure munie d'au moins deux empreintes pour éléments tubulaires et d'un premier élément de liaison à une extrémité, une partie supérieure munie d'au moins deux empreintes pour éléments tubulaires superposées à celles de la partie inférieure de sorte à former des conduites de passage pour les éléments tubulaires et d'un deuxième élément de liaison à une extrémité coopérant avec le premier élément de liaison pour former une liaison amovible entre les parties inférieure et supérieure de la bride, et un mécanisme de fixation à un support de l'ensemble de la bride formée par la partie inférieure liée à la partie supérieure. La bride est caractérisée en ce que la partie inférieure est munie à l'autre extrémité d'un premier élément d'indexage et la partie supérieure est munie à l'autre extrémité d'un deuxième élément d'indexage coopérant avec le premier élément d'indexage pour positionner de manière stable la partie inférieure par rapport à la partie supérieure, et en ce qu'elle comprend en outre un mécanisme de verrouillage des parties inférieure et supérieure distinct des éléments de liaison et d'indexage.

Une telle bride de fixation présente plusieurs avantages par rapport aux brides de l'art antérieur. Notamment, elle permet avant tout de désolidariser les opérations d'indexage et de verrouillage. En effet, le monteur utilisant la présente bride, indexe dans un premier temps les éléments tubulaires et les maintient dans cette position indexée grâce aux éléments d'indexage et de liaison agencés aux extrémités des parties inférieure et supérieure de la bride. Dans un deuxième temps, il verrouille les éléments tubulaires correctement indexés et maintenus au moyen du mécanisme de verrouillage assurant un transport sans risque de déplacement des éléments tubulaires montés sur bride avant fixation sur un support. En outre, une telle bride permet d'empêcher l'écoulement de fluide le long des éléments tubulaires, notamment jusqu'aux connecteurs de ces derniers et de résister aux sollicitations mécaniques de la boucle dynamique transmises à ces connecteurs pouvant entraîner la rupture des conducteurs par fatigue mécanique.

Selon une variante de réalisation avantageuse, le mécanisme de verrouillage est un mécanisme progressif. De cette manière, le monteur peut adapter le degré de verrouillage en fonction de la taille des éléments tubulaires permettant ainsi une tolérance plus grande entre la taille de ces éléments et les empreintes de la bride. De préférence, le mécanisme de verrouillage est formé d'une vis adaptée pour coopérer avec un premier évidement fileté dans la partie inférieure et un deuxième évidement fileté de même diamètre dans la partie supérieure. Un tel mécanisme permet un réglage aisé pour le monteur.

Selon une variante de réalisation avantageuse, le mécanisme de verrouillage est agencé entre deux empreintes des parties inférieure et supérieure. Le positionnement du mécanisme de verrouillage entre les empreintes assure une bonne répartition des efforts sur les éléments tubulaires entre les éléments de liaison situés à une extrémité de la bride et les éléments d'indexage situés à l'autre extrémité de la bride et donc un meilleur maintien des éléments tubulaires dans leur position indexée.

Selon une variante de réalisation avantageuse, la partie inférieure et la partie supérieure comprennent chacune trois empreintes semi cylindriques constituées d'une empreinte centrale et de deux empreintes distales, le mécanisme de fixation de l'ensemble étant agencé entre une empreinte distale et l'empreinte centrale des parties inférieures et supérieure et le mécanisme de verrouillage étant agencé entre l'autre empreinte distale et l'empreinte centrale des parties inférieure et supérieure. La répartition des moyens de fixation et des moyens de verrouillage entre les différentes empreintes assurent d'une part une bonne répartition des efforts sur la bride et d'autre part améliore encore le maintien des différents éléments tubulaires en place.

Selon un deuxième aspect, la présente invention concerne un procédé de montage d'éléments tubulaires sur un support de véhicule automobile au moyen d'une bride de fixation selon le premier aspect. Le procédé de montage comprend les étapes consistant à positionner les éléments tubulaires dans les empreintes de la partie inférieure ; à fermer les parties inférieure et supérieure au moyen des premier et deuxième éléments de liaisons ; à verrouiller les éléments tubulaires en position dans leur empreinte respective au moyen du mécanisme de verrouillage ; et à fixer la bride avec les éléments tubulaires associés sur un support au moyen du mécanisme de fixation.

Un tel procédé de montage permet au monteur de pouvoir séparément effectuer les opérations d'indexage et de verrouillage des éléments tubulaires assurant d'une part un meilleur positionnement et un meilleur maintien d'autre part de ces derniers.

D'autres caractéristiques et avantages de la présente invention apparaîtront plus clairement à la lecture de la description détaillée qui suit de modes de réalisation de l'invention donnés à titre d'exemples nullement limitatifs et illustrés par le dessin annexé, dans lequel :
- La figure 1 représente une vue éclatée d'une bride de fixation selon un mode de réalisation préféré de la présente invention ;
- les figures 2a et 2b représentent la première étape du procédé de montage ;
- les figures 3a et 3b représentent la deuxième étape du procédé de montage ;
- les figures 4a et 4b représentent la troisième étape du procédé de montage ;
- les figures 5a et 5b représentent la quatrième étape du procédé de montage ;
- la figure 6 représente les éléments tubulaires montés au moyen d'une bride de fixation selon la figure 1.

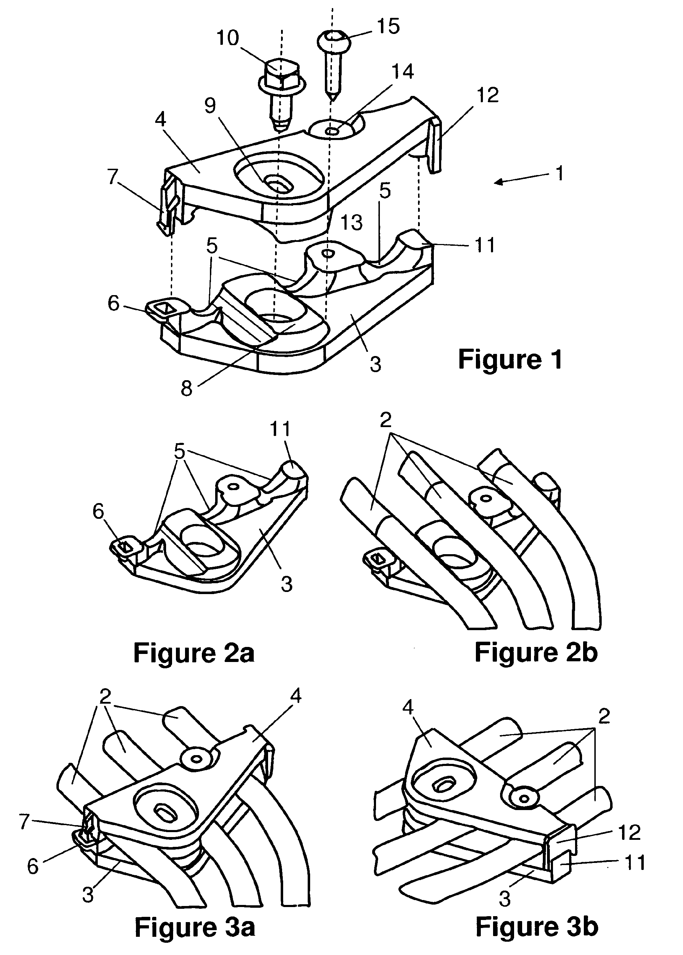

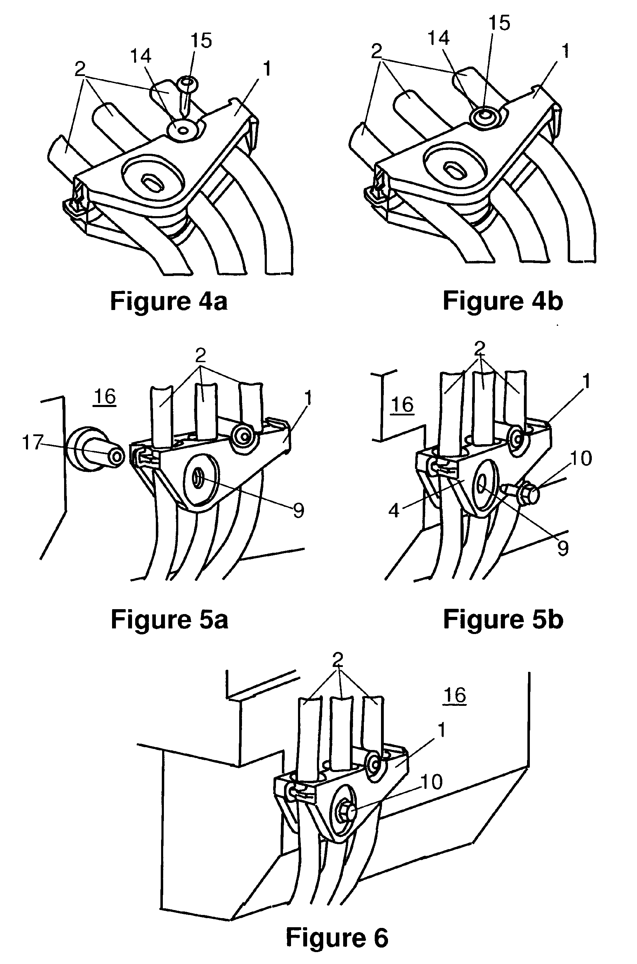

L'invention sera décrite ci-après uniquement à titre d'exemple non limitatif en relation avec les figures 1 et 6.

La figure 1 représente une vue éclatée d'une bride de fixation selon un mode de réalisation préféré de l'invention. La bride 1 comprend une partie inférieure 3 et une partie supérieure 4, chacune étant pourvue de plusieurs empreintes 5, de préférence semi cylindriques, destinées à recevoir des éléments tubulaires comme par exemple des câbles haute tension équipant un véhicule automobile.

Afin de faciliter le montage de ses câbles sur le véhicule, il est apparu important de dissocier le montage des éléments sur la bride du montage sur le véhicule proprement dit. A cet effet, la partie inférieure est pourvue à une extrémité d'un élément de liaison 6 réalisé par exemple sous la forme d'une boucle et à l'autre extrémité d'un élément d'indexage 11 tandis que la partie supérieure 4 est pourvue à une extrémité d'un élément de liaison 7 réalisé sous la forme d'un picot denté venant se clipser dans la boucle 6, et à l'autre extrémité d'un élément d'indexage 12 venant abuter contre l'élément 11 de manière à définir de manière précise la position entre les parties inférieure et supérieure. Les éléments de liaison et d'indexage permettent au monteur de réaliser l'indexage tout en assurant un pré-maintien des éléments tubulaires comme il sera expliqué plus en détail avec les figures 2 et 3. D'autre part, la bride est pourvue d'un mécanisme de verrouillage indépendant des éléments de liaison et d'indexage. Ce mécanisme de verrouillage est avantageusement réalisé sous la forme d'un premier évidement fileté 13 agencé sur la partie inférieure, d'un deuxième évidement fileté 14 de même diamètre que le premier évidement et agencé dans son prolongement sur la partie supérieure et une vis d'assemblage 15 venant verrouiller les deux parties inférieure et supérieure ensemble. Cette opération de verrouillage étant réalisée après l'opération d'indexage, le montage en est facilité. Ce principe de bride permet son intégration en câblerie. En effet, la vis d'assemblage garantit le maintien en position de la bride sur les câbles jusqu'à sa livraison en bord de ligne de montage du véhicule.

La bride de fixation comprend en outre des moyens de fixation de la bride sur un support externe, tel qu'une paroi de véhicule automobile. Ces moyens de fixation sont de préférence constitués par des évidements 8 et 9 traversants respectivement les parties inférieure et supérieure et une vis de fixation prévue pour être vissée sur le support au travers des évidements.

Comme cela a été mentionné précédemment, un but de la présente invention est de simplifier le procédé de montage de câbles haute tension en peigne le long d'une paroi d'un véhicule automobile. Les différentes étapes du procédé de montage à l'aide d'une bride de fixation telle que présentée ci-dessus vont être maintenant détaillé. Les figures 2a et 2b représente la première étape de ce procédé de montage. Cette première étape consiste dans le positionnement des câbles sur la bride. Cette opération est réalisée de préférence en câblerie sur un poste de travail adapté. La figure 2a représente la partie inférieure de la bride sur laquelle sont visibles les trois empreintes 5 destinées à recevoir des câbles haute tension. Aux deux extrémités, on retrouve d'un côté l'élément de liaison 6 en forme de boucle et de l'autre côté, l'élément d'indexage 11 sous forme d'un plateau. La figure 2b montre cette même partie inférieure 3 sur laquelle le monteur a positionné de manière précise les câbles 2. On remarque que les empreintes sont dessinées en peigne de sorte à assurer un positionnement en peigne des câbles correspondants.

Les figures 3a et 3b représentent la deuxième étape du procédé de montage. Cette deuxième étape consiste dans la fermeture de la bride par clipsage et indexage simultanés. Lors de cette deuxième étape, comme cela est visible sur la figure 3a, le picot denté 7 de la partie supérieure 4 vient se clipser dans la boucle 6 de la partie inférieure 3 de sorte à assurer un pré-maintien des deux parties de la bride ensemble. De l'autre côté, comme cela est visible sur la figure 3b, les éléments d'indexage 11 et 12 sont superposés de manière à assurer un bon positionnement des parties inférieure et supérieure l'une par rapport à l'autre.

Les figures 4a et 4b représentent la troisième étape du procédé de montage. Cette troisième étape consiste dans le verrouillage de la bride après le positionnement précis et pré-maintien des câbles effectués. La figure 4a représente la bride 1 juste avant que la vis d'assemblage 15 ne soit vissée dans l'évidement fileté 14 de la partie supérieure puis celui de la partie inférieure (non visible sur cette figure). La figure 4b représente la bride 1 après vissage de la vis d'assemblage 14. L'utilisation d'un mécanisme de verrouillage indépendant des éléments de liaison et d'indexage garantit un maintien ferme de la position des câbles 2 durant le conditionnement et le transport de la bride équipée de câbles. Cette étape de verrouillage est d'autant plus aisée pour le monteur que les câbles sont pré-maintenus suite à l'étape précédente. En outre, le mécanisme de verrouillage est avantageusement progressif, comme c'est le cas avec l'utilisation d'une vis d'assemblage. De cette manière, le monteur peut régler la force de maintien en fonction des câbles, ce qui permet une plus grande tolérance au niveau de la dimension des câbles utilisés.

Grâce à une telle bride 1, on comprendra que le monteur peut aisément positionner, maintenir puis bloquer les éléments tubulaires 2 dans les empreintes 5 et ceci dans un atelier de câblerie.

Les figures 5a et 5b représentent la quatrième étape du procédé de montage. Cette quatrième étape consiste dans la mise en place et la fixation sur le véhicule des câbles 2 par l'intermédiaire de la bride 1 et ce par un seul opérateur sur la ligne de montage du véhicule. Comme cela est visible sur la figure 5a, le support 16, c'est-à-dire la paroi du véhicule sur laquelle on doit monter la bride 1, est muni d'un téton percé 17 destiné à venir s'enchâsser dans l'évidement pratiquée dans la partie inférieure (non visible sur cette figure). Sur la figure 5b, la bride 1, après montage sur le téton percé, est fixée sur le support 16 par le biais d'une vis de fixation 10 venant se visser au travers de l'évidement 9 pratiqué dans la partie supérieure 4 et le téton percé. La figure 6 représente, l'opération de montage terminée, les câbles 2 fixés au support 16 par l'intermédiaire de la bride de fixation 1. De cette manière, les câbles sont maintenus peignés et contraints.

La présente invention présente de nombreux avantages parmi lesquelles, la possibilité de pré-montage qui facilite la manutention lors du montage sur le véhicule, la bride étant déjà présente sur les câbles. Ainsi, le monteur n'a pas a peigné les câbles, mais seulement à fixer la bride sur le support. En outre, le serrage en contraintes des câbles par la vis d'assemblage permet de stopper efficacement l'écoulement des fluides le long des câbles. La fixation rigide de la bride sur son support et le maintien des câbles permet de conserver la boucle dynamique et d'éviter la transmission des efforts aux connecteurs (non représentés). Enfin, la préparation en câblerie permet de faciliter le travail du monteur et de gagner en temps de montage et en ergonomie.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Bride (1) de fixation d'éléments tubulaires (2) comprenant
- une partie inférieure (3) munie d'au moins deux empreintes (5) pour éléments tubulaires et d'un premier élément de liaison (6) à une extrémité,
- une partie supérieure (4) munie d'au moins deux empreintes pour éléments tubulaires superposées à celles de la partie inférieure de sorte à former des conduits de passage pour les éléments tubulaires et d'un deuxième élément de liaison (7) à une extrémité coopérant avec le premier élément de liaison pour former une liaison mobile entre les parties inférieure et supérieure de la bride, et
- un mécanisme de fixation (8, 9, 10) à un support externe de l'ensemble de la bride formée par la partie inférieure liée à la partie supérieure,
**caractérisée en ce que** la partie inférieure est munie à l'autre extrémité d'un premier élément d'indexage (11) et que la partie supérieure est munie à l'autre extrémité d'un deuxième élément d'indexage (12) coopérant avec le premier élément d'indexage pour positionner la partie inférieure par rapport à la partie supérieure,
et **en ce que** la bride comprend en outre un mécanisme de verrouillage (13, 14, 15) des parties inférieure et supérieure distinct des éléments de liaison et d'indexage.

2. Bride (1) de fixation selon la revendication 1, **caractérisée en ce que** le mécanisme de verrouillage (13, 14, 15) est un mécanisme progressif.

3. Bride (1) de fixation selon la revendication 1 ou 2, **caractérisée en ce que** le mécanisme de verrouillage est formé d'une vis (15) adaptée pour coopérer avec un premier évidement fileté (13) dans la partie inférieure (3) et un deuxième évidement fileté (14) de même diamètre dans la partie supérieure (4).

4. Bride (1) de fixation selon l'une des revendications 1 à 3, **caractérisée en ce que** le mécanisme de verrouillage (13, 14, 15) est agencé entre deux empreintes (5) des parties inférieure (3) et supérieure (4).

5. Bride (1) de fixation selon l'une des revendications 1 à 4, **caractérisée en ce que** la partie inférieure (3) et la partie supérieure (4) comprennent chacune trois empreintes (5) semi cylindriques constituées d'une empreinte centrale et de deux empreintes distales, le mécanisme de fixation (8, 9, 10) de l'ensemble étant agencé entre une empreinte distale et l'empreinte centrale des parties inférieures et supérieure et le mécanisme de verrouillage (13, 14, 15) étant agencé entre l'autre empreinte distale et l'empreinte centrale des parties inférieure et supérieure.

6. Procédé de montage d'éléments tubulaires (2) sur un support (16) de véhicule automobile au moyen d'une bride (1) de fixation selon l'une des revendications 1 à 5, comprenant les étapes consistant à :
- positionner les éléments tubulaires (2) dans les empreintes (5) de la partie inférieure (3) ;
- fermer les parties inférieure (3) et supérieure (4) au moyen des premier (6) et deuxième éléments (7) de liaisons et indexer les parties inférieure et supérieure au moyen des premier et deuxième éléments d'indexage ;
- verrouiller les éléments tubulaires en position dans leur empreinte respective au moyen du mécanisme de verrouillage (13, 14, 15) ; et
- fixer la bride avec les éléments tubulaires associés sur un support au moyen du mécanisme de fixation (8, 9, 10).

## Patentansprüche

1. Flansch (1) zur Befestigung röhrenförmiger Elemente (2), umfassend
- einen unteren Abschnitt (3), der mit zumindest zwei Mulden (5) für röhrenförmige Elemente, und mit einem ersten Verbindungselement (6) an einem Ende versehen ist,
- einen oberen Abschnitt (4), der mit zumindest zwei Mulden für röhrenförmige Elemente versehen ist, die über jenen des unteren Abschnitts angeordnet sind, sodass sie Durchlasskanäle für die röhrenförmigen Elemente bilden, sowie mit einem zweiten Verbindungselement (7) an einem Ende, das mit dem ersten Verbindungselement zusammenwirkt, um eine mobile Verbindung zwischen dem oberen und dem unteren Abschnitt des Flansches zu bilden, und
- einen Mechanismus zum Befestigen (8, 9, 10) auf einer Halterung außerhalb der Flanschbaugruppe, der durch den unteren Abschnitt in Verbindung mit dem oberen Abschnitt gebildet wird,
**dadurch gekennzeichnet, dass** der untere Abschnitt am anderen Ende mit einem ersten Indexierelement (11) versehen ist, und dass der obere Abschnitt am anderen Ende mit einem zweiten Indexierelement (12) versehen ist, das mit dem ersten Indexierelement zusammenwirkt, um den unteren Abschnitt im Verhältnis zum oberen Abschnitt zu positionieren,
und dadurch, dass der Flansch darüber hinaus einen Verriegelungsmechanismus (13, 14, 15) der unteren und oberen Abschnitte umfasst, der sich von den Verbindungs- und Indexierelementen unterscheidet.

2. Befestigungsflansch (1) nach Anspruch 1, **dadurch gekennzeichnet, dass** der Verriegelungsmechanismus (13, 14, 15) ein progressiver Mechanismus ist.

3. Befestigungsflansch (1) nach Anspruch 1 oder 2, **dadurch gekennzeichnet, dass** der Verriegelungsmechanismus aus einer Schraube (15) gebildet wird, die sich dazu eignet, mit einer ersten Gewindeausnehmung (13) im unteren Abschnitt (3) und einer zweiten Gewindeausnehmung (14) gleichen Durchmessers im oberen Abschnitt (4) zusammenzuwirken.

4. Befestigungsflansch (1) nach einem der Ansprüche 1 bis 3, **dadurch gekennzeichnet, dass** der Verriegelungsmechanismus (13, 14, 15) zwischen zwei Mulden (5) des unteren (3) und des oberen (4) Abschnittes angeordnet ist.

5. Befestigungsflansch (1) nach einem der Ansprüche 1 bis 4, **dadurch gekennzeichnet, dass** der untere Abschnitt (3) und der obere Abschnitt (4) jeweils drei halbzylindrische Mulden (5) umfasst, die aus einer mittleren Mulde und zwei von der Mitte entfernten Mulden gebildet werden, und der Mechanismus zum Befestigen (8, 9, 10) der Baugruppe zwischen einer von der Mitte entfernten und der mittleren Mulde der unteren und oberen Abschnitte angeordnet ist, und der Verriegelungsmechanismus (13, 14, 15) zwischen einer anderen von der Mitte entfernten und der mittleren Mulde der unteren und oberen Abschnitte angeordnet ist.

6. Verfahren zur Montage röhrenförmiger Elemente (2) auf einem Träger (16) eines Kraftfahrzeuges mithilfe eines Befestigungsflansches (1) nach einem der Ansprüche 1 bis 5, umfassend die folgenden Schritte:
- Positionieren der röhrenförmigen Elemente (2) in den Mulden (5) des unteren Abschnitts (3);
- Schließen des unteren (3) und oberen (4) Abschnitts mit den ersten (6) und den zweiten (7) Verbindungselementen und Indexieren der unteren und oberen Abschnitte mit den ersten und den zweiten Indexierelementen;
- Verriegeln der röhrenförmigen Elemente in der Stellung in ihrer jeweiligen Mulde mit dem Verriegelungsmechanismus (13, 14, 15); und
- Befestigen des Flansches mit den eingelegten röhrenförmigen Elementen auf einem Träger mithilfe des Befestigungsmechanismus (8, 9, 10).

## Claims

1. Flange (1) for attaching tubular elements (2) comprising
- a lower portion (3) provided with at least two recesses (5) for tubular elements and with a first linking element (6) at one end,
- an upper portion (4) provided with at least two recesses for tubular elements being vertically adjacent to those of the lower portion in such a way as to form channels for the tubular elements to pass therethrough and with a second linking element (7) at one end engaging with the first linking element in order to form a mobile link between the upper and lower portions of the flange, and
- a mechanism for attaching (8, 9, 10) to an outer substrate of the flange assembly formed by the lower portion linked to the upper portion,
**characterised in that** the lower portion is provided at the other end with a first indexing element (11) and that the upper portion is provided at the other end with a second indexing element (12) engaging with the first indexing element in order to position the lower portion relative to the upper portion,
and **in that** the flange further comprises a mechanism for locking (13, 14, 15) the upper and lower portions that is separate from the indexing and linking elements.

2. Flange (1) for attaching according to claim 1, **characterised in that** the mechanism for locking (13, 14, 15) is a progressive mechanism.

3. Flange (1) for attaching according to claim 1 or 2, **characterised in that** the mechanism for locking is formed from a screw (15) adapted to engage with a first threaded bore (13) in the lower portion (3) and a second threaded bore (14) of likewise diameter in the upper portion (4).

4. Flange (1) for attaching according to one of claims 1 to 3, **characterised in that** the mechanism for locking (13, 14, 15) is arranged between two recesses (5) of the lower (3) and upper (4) portions.

5. Flange (1) for attaching according to one of claims 1 to 4, **characterised in that** the lower portion (3) and the upper portion (4) each include three semi-cylindrical recesses (5) constituted of a central recess and of two distal recesses, with the mechanism for attaching (8, 9, 10) the assembly being arranged between a distal recess and the central recess of the upper and lower portions and the mechanism for locking (13, 14, 15) being arranged between the other distal recess and the central recess of the upper and lower portions.

6. Method for mounting tubular elements (2) onto a support (16) of a motor vehicle by means of a flange (1) for attaching according to one of claims 1 to 5, comprising the steps of:
- positioning the tubular elements (2) in the recesses (5) of the lower portion (3);
- closing the lower (3) and upper (4) portions by means of the first (6) and second (7) linking elements and indexing the upper and lower portions by means of the first and second indexing elements;
- locking the tubular elements in position in their respective recess by means of the mechanism for locking (13, 14, 15); and
- attaching the flange with the associated tubular elements onto a support by means of the mechanism for attaching (8, 9, 10).
